# EUROPEAN PATENT SPECIFICATION

(11) **EP 3 293 542 B1**
(45) Date of publication and mention of the grant of the patent: **01.11.2023**
(21) Application number: 16187849.1
(22) Date of filing: 08.09.2016
(51) Int. Cl.: G01S 13/87, G01S 13/931, G06V 20/58, G01S 13/86

(54) **APPARATUS FOR SENSING A VEHICULAR ENVIRONMENT WHEN FITTED TO A VEHICLE**
VORRICHTUNG ZUR ERFASSUNG EINER FAHRZEUGUMGEBUNG IN EINEM FAHRZEUG
APPAREIL PERMETTANT DE DÉTECTER UN ENVIRONNEMENT VÉHICULAIRE LORSQU'IL EST MONTÉ SUR UN VÉHICULE

(43) Date of publication of application: 14.03.2018
(73) Proprietor: KNORR-BREMSE Systeme für Nutzfahrzeuge GmbH, 80809 München (DE)
(72) Inventor: Németh, Huba, 1116 Budapest (HU); Balogh, Levente, 2310 Szigetszentmiklós (HU)
(74) Representative: Maiwald GmbH

(56) References cited:
- WO-A1-2014/138765
- DE-A1-102006 049 879
- DE-A1-102014 213 171
- US-A1- 2005 062 615
- US-A1- 2006 092 073

## Description

### FIELD OF THE INVENTION

The present invention relates to an apparatus for sensing a vehicular environment when fitted to a vehicle, to a vehicle configured to sense a vehicular environment, and to a method for sensing a vehicular environment.

### BACKGROUND OF THE INVENTION

The autonomous operation of transport vehicles is a new field of inventions. Driver assistance systems on commercial vehicles already support different highway related functions like lane departure warning, adaptive cruise control or automatic emergency braking. SAE Automation level 2 systems require the presence and attention of the driver. Level 3 systems should manage autonomous driving without the continuous attention of the driver. Information relating to SAE Automation levels can be found at http://www.sae.org/misc/pdfs/automated_driving.pdf.

EP2168835A1 relates to systems and methods for autonomous control of a vehicle include interruptible, behavior-based, and selective control. Autonomous control is achieved by using actuators that interact with input devices in the vehicle. The actuators (e.g., linkages) manipulate the input devices (e.g., articulation controls and drive controls, such as a throttle, brake, tie rods, steering gear, throttle lever, or accelerator) to direct the operation of the vehicle, and can be considered to be control of vehicle functions. Although operating autonomously, manual operation of the vehicle is possible following the detection of events that suggest manual control is desired. Subsequent autonomous control may be permitted, permitted after a prescribed delay, or prevented. Systems and methods for processing safety signals and/or tracking terrain features are also utilized by an autonomous vehicle.

US2005/062615A1 describes an object sensing apparatus for driver assistance systems in motor vehicles, including at least two sensor systems which measure data concerning the location and/or motion status of objects in the vicinity of the vehicle, and whose detection regions overlap one another, characterized by an error recognition device that checks the data measured by the sensor systems for absence of contradictions, and outputs an error signal upon detection of a contradiction.

DE102014213171A1 relates to a system for autonomous vehicle guidance, which is designed so that an at least limited and / or time-limited vehicle guidance is still possible even if a part of the components of the system fails. The invention further relates to a vehicle having such a system.

WO2014/138765A1 relates to a device for controlling the braking and/or steering and/or acceleration in a motor vehicle, said device comprising a number of different sensor components, two heterogeneous sensor fusion components, a man-machine interface component and a preferably intelligent actuator control component, each of said components forming a fault-containment unit and having a TTEthernet communication interface. All the components are connected to a central TTEthernet message buffer unit, the components communicate with one another exclusively by using standardized Ethernet messages and a diagnostic unit for the real time observation of the switched messages can be connected to the TTEthernet message buffer unit.

DE102006049879A1 system has radar sensors integrated in front in a vehicle and for monitoring of a front end of the vehicle, where two of the radar sensors are long range radar (LRR) sensors. The two LRR-sensors are arranged in left and right sides of the vehicle in the proximity of the lateral vehicle margin. The LRR-sensors are oriented, so that their optical axes are diverged. A fusion device alternately evaluates signals of the LRR-sensors from measuring cycle to another measuring cycle.

### SUMMARY OF THE INVENTION

Therefore, it would be advantageous to have an improved technology for sensing a vehicular environment, thereby enabling the safe control and maneuvering of vehicles.

The object of the present invention is solved with the subject matter of the independent claims, wherein further embodiments are incorporated in the dependent claims. It should be noted that the following described aspects of the invention apply also for the apparatus for sensing a vehicular environment, vehicle configured to sense a vehicular environment and the method for sensing a vehicular environment.

In a first aspect, there is provided an apparatus for sensing a vehicular environment when fitted to a vehicle as defined in appended claim 1

In other words, at least one forward looking sensor can be positioned towards one of the front corners of the vehicle, and is positioned in order to provide a view of a roadway from an off-centre viewpoint. To put this another way, one sensor can be positioned towards the front left hand side of a vehicle, or one sensor can be positioned towards the front right hand side of a vehicle, or one sensor can be positioned towards the front right hand side of a vehicle and a second sensor positioned towards the front right hand side of the vehicle, or one sensor can be positioned towards the front left hand side of a vehicle and a second sensor positioned towards the front left hand side of the vehicle, or one sensor can be positioned towards the front left hand side of a vehicle and a second sensor positioned towards the front right hand side of the vehicle, and these possibilities apply for three, four and more sensors equivalently.

In this manner, a forward looking sensor can be positioned such that it has a field of view that is not blocked by other objects in the lane in front of the vehicle, such as by other vehicles. In this way, the forward looking sensor is providing a field of view at an outer edge of the front of the vehicle that simulates what an experienced driver does when mitigating dangers, by moving their head to one side in order to provide a better view of the scene ahead.

Additionally, by having at least one forward looking sensor obtaining scene data from a front side of the vehicle an understanding of the scene ahead is provided even when a vehicle in front is in close proximity to the front of the vehicle. Furthermore, lane positioning information is better provided.

In an example, the at least one forward looking sensor comprises a radar sensor.

In other words, the vehicular environment scene data comprises radar data. In an example, the processing unit is configured to process the radar data to determine the scene information, such as the location of objects, information relating to the identity of objects, the location of the road side.

In this manner, all weather functionality is provided and day and night operability is enhanced.

In an example, the at least one forward looking sensor comprises a camera sensor.

In other words, the vehicular environment scene data comprises image data. In an example, the processing unit is configured to process the image data to determine the scene information, such as the location of objects, information relating to the identity of objects, the location of the road side. In an example, image processing is used to determine the scene information. In an example, the camera is a visible camera. In other words, the camera can sense rays in the visible frequency range, like photographic cameras. In an example, the camera is an infrared camera. In other words, the camera can sense rays in the infrared frequency range. In an example, the infrared camera has an integrated lighting element and therefore can enhance operation during the night, but in other examples the infrared camera does not have such an integrated lighting element. The infrared camera may have a lower coluring resolution than a visible camera, however the skilled will appreciate what type of camera to use and indeed a visible camera and an infrared camera can be used together, which could be integrated into a single camera.

In this manner, scene information can be processed to determine the identity of objects with high degrees of confidence, such as determining that a person is stood by the edge of the road and that it is not a mailbox at that location.

In an example, the at least one forward looking sensor comprises a pair of radar sensors.

In this manner, all weather functionality is provided and day and night operability is enhanced, and redundancy is provided because if one radar fails continuity of operability is maintained.

In this way by having two sensors, the apparatus can handle the situation when one of the sensors malfunctions or goes offline, enabling the continued provision of information that can enable a minimal risk safety manoeuvre to be carried out even after such a partial malfunction.

In an example, a first one of the pair of radar sensors is horizontally spaced from the centre-plane such that it is closer to the left-plane than to the centre-plane and a second one of the pair of radar sensors is horizontally spaced from the centre-plane such that it is closer to the right-plane than to the centre-plane.

In this manner, the field of views provided have less chance of being blocked by other objects in the lane in front of the vehicle, such as by other vehicles. Furthermore, greater positional accuracy of objects within the field of view is provided and better identification of objects in the field of view is provided, because they are being viewed at from different positions thereby providing more depth information than that provided by a single radar sensor.

In an example, the at least one forward looking sensor comprises a pair of camera sensors.

In this manner, the identity of objects can be determined with high confidence, and redundancy is provided because if one camera fails continuity of operability is maintained.

In an example, a first one of the pair of camera sensors is horizontally spaced from the centre-plane such that it is closer to the left-plane than to the centre-plane and a second one of the pair of camera sensors is horizontally spaced from the centre-plane such that it is closer to the right-plane than to the centre-plane.

In this manner, the field of views provided have less chance of being blocked by other objects in the lane in front of the vehicle, such as by other vehicles. Furthermore, greater positional accuracy of objects within the field of view is provided and better identification of objects in the field of view is provided, because they are being viewed at from different positions thereby providing more depth information than that provided by a single camera sensor.

In an example, the at least one forward looking sensor comprises at least two sensors, and wherein a first power supply is configured to power a first one of the at least two sensors and a second power supply is configured to power a second one of the at least two sensors.

In this manner, redundancy is provided. Vehicular environment scene information can continue to be acquired if one sensor fails. By having different sensors powered by different power supplies, means that failure of one power supply does not stop the acquisition of vehicular environment scene information.

In this way by having two sensors powered by separate circuits, the apparatus can handle the situation when one of the sensors malfunctions or goes offline and/or one of the power circuits fails, enabling the continued provision of information that can enable a minimal risk safety manoeuvre to be carried out even after such a partial malfunction.

In an example, a first power supply is configured to power the first one of the pair of radar sensors and the first one of the camera sensors, and a second power supply is configured to power the second one of the pair of radar sensors and the second one of the camera sensors.

In this manner sensor pairs of a radar sensor and camera sensor can operate to provide all weather functionality with enhanced day and night operability, and at the same time the identity of objects can be determined with high degrees of confidence. This is provided with reduced blockage of the field of view. Redundancy is provided, where operability if maintained if a camera sensor fails and if a radar sensor also, and further redundancy is provided where operability is maintained if a power supply fails.

In a second aspect there is provided a vehicle configured to sense a vehicular environment as defined in appended claim 7.

In this way, a vehicle is provided with an enhanced highway operation control and collision avoidance system that mitigates blockages of the field of view.

In an example, control of the at least one vehicle function comprises inputs applied to a braking system and/or inputs applied to an accelerator/decelerator system.

In this manner, on the basis of scene information determined by the processing unit and provided by the output unit, such as a child stepping into the road, or a car making an emergency stop that could be occurring for a car that is several cars ahead, or an approaching turn in the road, the vehicle can be automatically decelerated and/or stopped.

In a third aspect, there is provided a method for sensing a vehicular environment as defined in appended claim 8.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of an example of an apparatus for sensing a vehicular environment when fitted to a vehicle;
Fig. 2 shows a schematic representation of an example of a vehicle configured to sense a vehicular environment;
Fig. 3 shows a plan view of a vehicle configured to sense a vehicular environment;
Fig. 4 shows a method for sensing a vehicular environment;
Fig. 5 shows a schematic representation of an example of a vehicle configured to sense a vehicular environment;
Fig. 6 shows a schematic representation of an example of a vehicle configured to sense a vehicular environment; and
Fig. 7 shows a schematic representation of an example of a vehicle configured to sense a vehicular environment.

### DETAILED DESCRIPTION OF EMBODIMENTS

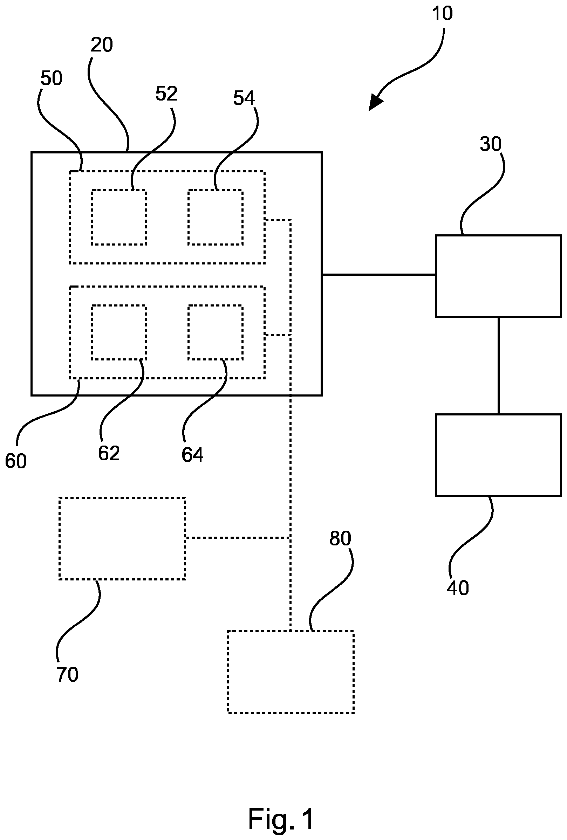

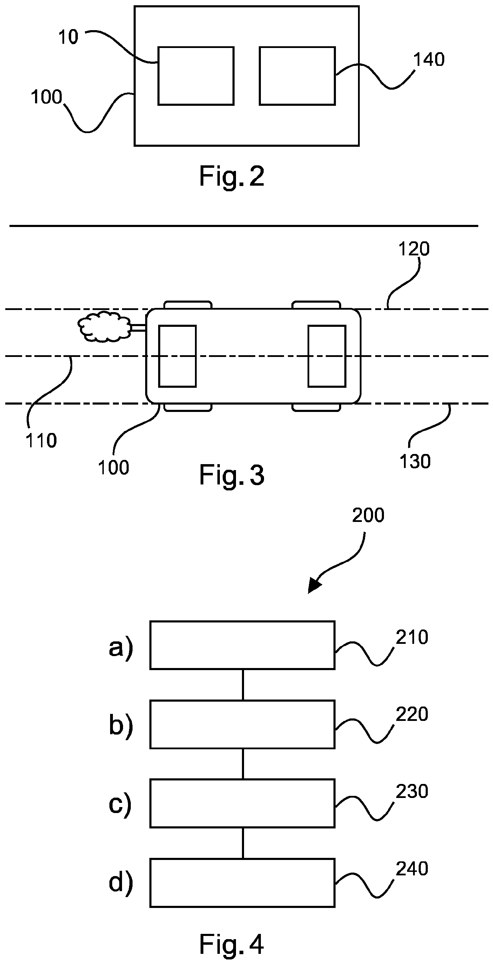

**Fig. 1** shows an apparatus 10 for sensing a vehicular environment when fitted to a vehicle 100. The apparatus 10 comprises at least one forward looking sensor 20, a processing unit 30, and an output unit 40. The at least one forward looking sensor 20 is configured to acquire at least one vehicular environment scene data. The at least one forward looking sensor 20 is configured to provide the at least one vehicular environment scene data to the processing unit 20. This is done via wired or wireless communication. The processing unit 30 is configured to determine scene information on the basis of the at least one vehicular environment scene data. The processing unit 30 communicates with the output unit 40 via wired or wireless communication, and the output unit 40 is configured to output data representative of the scene information. With reference to **Fig. 3****,** which shows a plan view of the vehicle 100, the at least one forward looking sensor 20 is configured to acquire the at least one vehicular environment scene data when fitted to at least one position at the front of the vehicle 100. The vehicle is defined by a vertical centre-plane 110 that runs in a forward-aft direction along the centre of the vehicle and the vehicle is defined by a vertical left-plane 120 that runs in a forward-aft direction along the left hand side of the vehicle and the vehicle is defined by a vertical right-plane 130 that runs in a forward-aft direction along the right hand side of the vehicle. The at least one position of the forward looking sensor 20 is horizontally spaced from the centre plane 110 such that it is closer to the left-plane 120 than to the centre-plane 110 or is closer to the right plane 130 than to the centre-plane 110.

In an example, the determined scene information relates to information on objects within a field of view of the at least one forward looking sensor. In an example, the determined scene information relates to the position of an object or the positions of objects within a field of view of the at least one forward looking sensor. In an example, the determined scene information relates to the identification of an object or objects in a field of view of the at least one forward looking sensor.

In this manner, the apparatus can determine the position of another vehicle, person or animal, such as a dog, with respect to a roadway and determine if they are in a position that requires remedial action, where the output unit provides appropriate output that can be used to warn the driver and/or can be used to effect automatic vehicle control inputs, such as the application of brakes and/or the reduction of input to an accelerator pedal. By having the at least one forward looking sensor positioned at the front of the vehicle off to one side of the vehicle, a vehicle immediately in front of the vehicle with the apparatus does not block the view and hinder the provision of such information. For example, the vehicle with the apparatus could be following two vehicles and the first vehicle could effect an emergency stop, and the apparatus can provide appropriate output data to warn the driver of this or automatically apply control input to the vehicle before the second vehicle that is immediately in front has starting applying their brakes.

In an example, the determined scene information relates to the position of a side of the road with respect to the vehicle. In an example, the determined scene information relates to the position of road markings with respect to the vehicle.

In this manner, the apparatus can ensure that a driver of a vehicle keeps their vehicle located with lane boundaries and is provided with appropriate information if the vehicle was moving towards a lane marker or moving towards the side of the road. Also, the apparatus can warn the driver or apply appropriate inputs to the vehicle such as applying brakes and/or reducing input to the accelerator pedal if the vehicle is approaching a corner and the vehicle is travelling too fast to negotiate that corner. The apparatus can do this even when another vehicle is immediately in front of it, because the forward view is not blocked. For example, a family saloon could be following a sports car and the two vehicles are approaching a tight corner. The sports car can negotiate the corner at the speed it is currently travelling at, but the family saloon cannot. The driver of the family saloon may not have visibility of the corner, but the apparatus can warn the driver and/or apply automatic vehicle control input if necessary.

In an example, the at least one position of the forward looking sensor is horizontally spaced from the centre plane such that it is just past the 50% distance point between the centre-plane and the right or left plane. In an example, the at least one position of the forward looking sensor is horizontally spaced from the centre plane such that it is (or they are) 60% of the distance between the centre-plane and the right or left plane. In an example, the at least one position of the forward looking sensor is horizontally spaced from the centre plane such that it is (or they are) 75% of the distance between the centre-plane and the right or left plane. In an example, the at least one position of the forward looking sensor is horizontally spaced from the centre plane such that it is (or they are) 90% of the distance between the centre-plane and the right or left plane. In an example, the at least one position of the forward looking sensor is horizontally spaced from the centre plane such that it is (or they are) substantially 100% of the distance between the centre-plane and the right or left plane - in other words located at the outer edge of the vehicle. In examples, where there are more than one sensors, they can be located at different distances from the centre line, for example in the case of two sensors they can be 100%/90%, 100%/75%, 90%/75%, 60%/90% or any combination of distances between 51% and 100% of the distance.

According to an example, the at least one forward looking sensor 20 comprises a radar sensor 50.

According to an example, the at least one forward looking sensor 20 comprises a camera sensor 60.

In an example, the at least one forward looking sensor comprises a radar sensor and comprises a camera sensor. In this manner, all weather functionality is provided and day and night operability is enhanced, and at the same time the identity of objects can be determined with high degrees of confidence, and this is provided with enhanced forward looking visibility because of reduced field of view blockage.

According to an example, the at least one forward looking sensor 20 comprises a pair of radar sensors 52, 54.

The processing unit is configured to process radar data from one radar and process radar data from the other radar in combination in order to determine location information within the field of view. In this way, less expensive radar sensors can be utilised where the cost of two such radars is less than the cost of a single more sophisticated radar sensor.

A first one of the pair of radar sensors 52 is horizontally spaced from the centre-plane 110 such that it is closer to the left-plane 120 than to the centre-plane and a second one of the pair of radar sensors 54 is horizontally spaced from the centre-plane such that it is closer to the right-plane 130 than to the centre-plane.

According to an example, the at least one forward looking sensor 20 comprises a pair of camera sensors 62, 64.

The processing unit is configured to process image data from one radar and process image data from the other radar in combination in order to determine location information within the field of view and determine object identity information. In an example, data from the two cameras is used to provide triangulation information to determine the distance to objects. In an example, data from the two cameras is used to obtain 3D image data of the scene.

According to an example, a first one of the pair of camera sensors 62 is horizontally spaced from the centre-plane 110 such that it is closer to the left-plane 120 than to the centre-plane and a second one of the pair of camera sensors 64 is horizontally spaced from the centre-plane such that it is closer to the right-plane 130 than to the centre-plane.

According to an example, the at least one forward looking sensor 20 comprises at least two sensors. A first power supply 70 is configured to power a first one of the at least two sensors and a second power supply 80 is configured to power a second one of the at least two sensors. In other words separate circuits can be used to power separate sensors.

In an example, the first power supply is a battery. In an example, the second power supply is a battery. In an example, the first power supply can be a generator. In an example, the second power supply can be a generator. In an example, the first power supply is formed from a battery and a generator. In this example, a first battery can be used to provide power when the internal combustion engine is not running. However, when the internal combustion engine is running a first generator powered from the engine can be used to provide power and power need not be taken from the battery. Similar the second power supply can be formed from a second battery and a second generator.

According to an example, the first power supply 70 is configured to power the first one of the pair of radar sensors 52 and the first one of the camera sensors 62. The second power supply 80 is then configured to power the second one of the pair of radar sensors 54 and the second one of the camera sensors 64.

The apparatus is fitted to a vehicle.

**Fig. 2** shows a vehicle 100 configured to sense a vehicular environment. The vehicle 100 comprises an apparatus 10 for sensing a vehicular environment as described with reference to **Fig. 1** and **Fig. 3****.** The vehicle 100 also comprises a vehicle control system 140. The apparatus 10 is configured to cooperate with the vehicle control system 140 to control at least one vehicle function.

In this way, a vehicle is provided with an enhanced highway operation control and collision avoidance system that mitigates blockages of the field of view.

According to an example, control of the at least one vehicle function comprises inputs applied to a braking system and/or inputs applied to an accelerator/decelerator system.

**Fig. 4** shows a method 200 for sensing a vehicular environment in its basic steps. The method 200 comprises:
in an acquiring step 210, also referred to as step a), at least one forward looking sensor 20 is used to acquire at least one vehicular environment scene data;
in a providing step 220, also referred to as step b), the at least one vehicular environment scene data is provided to a processing unit 30;
in a determining step 230, also referred to as step c), the processing unit determines scene information on the basis of the at least one vehicular environment scene data;
in an outputting step 240, also referred to as step d), an output unit 40 outputs data representative of the scene information; and
the at least one forward looking sensor 20 is configured to acquire the at least one vehicular environment scene data when fitted to at least one position at the front of a vehicle 100. The vehicle is defined with respect to axis lines, as discussed above with reference to **Fig. 3****.** With respect to these axis lines, the at least one position of the forward looking sensor 20 is horizontally spaced from the centre plane 110 such that it is closer to the left-plane 120 than to the centre-plane or is closer to the right plane 130 than to the centre-plane.

Current highway related driver assistance functions typically use a forward looking radar and a forward looking camera, where they are both located approximately in the front middle plane of the motor vehicle. However, if another object in the same lane is close to the vehicle front then both sensors become blocked, and even lane detection is not possible.

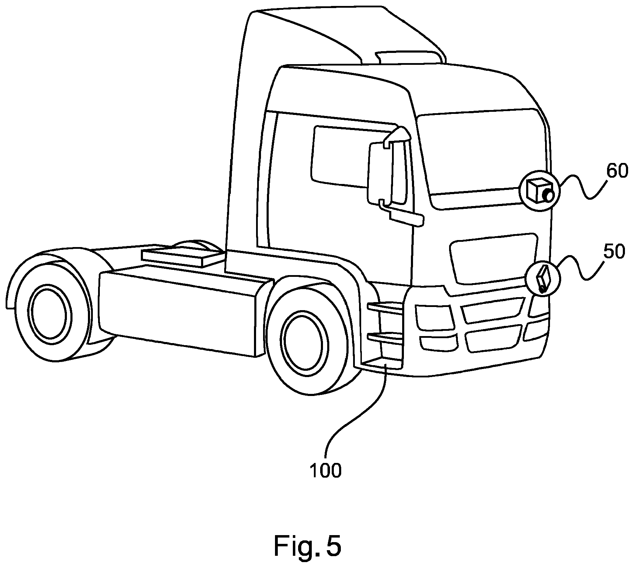

The apparatus, vehicle and method that address this are now further described with reference to **Fig. 5****,** **Fig. 6****,** and **Fig. 7****.**

**Fig. 5** shows a vehicle 100 configured to sense a vehicular environment, where driver side corner placement of environmental sensors for a commercial motor vehicle 100 is shown. As shown in **Fig. 5****,** a forward looking radar 50 and a forward looking camera 60, are not placed in the middle plane of the vehicle 100 but to one of the front corners. In this position blockage of the required field of view by other objects in the lane in front of the vehicle is much less, and the view is less limited. The positioning of the forward looking radar 50 and camera 60 forms, in a way, a simulation of the field of view provided as a result of a driver head movement toward the vehicle corner that an experienced driver does in order to look forward to see an object that is in the same lane in front of the vehicle that is in close proximity in front of the vehicle the driver is in.

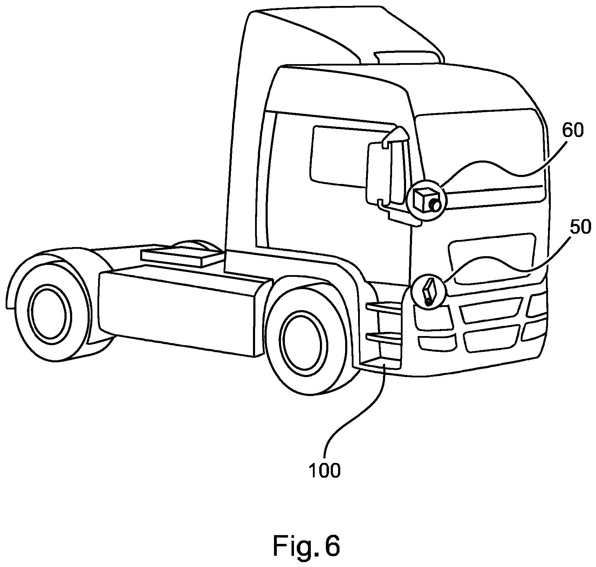

**Fig. 6** shows a vehicle 100 configured to sense a vehicular environment, where non-driver side corner placement of a far field looking camera 60 and radar 50 for a commercial motor vehicle 100 is shown.

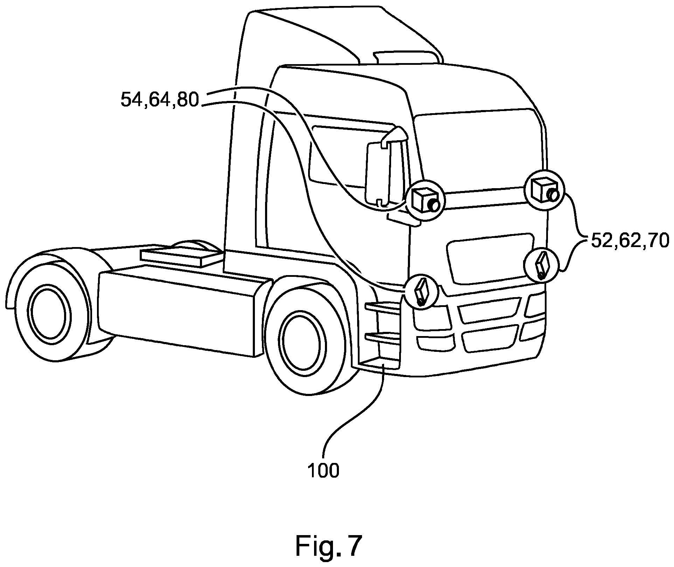

**Fig. 7** shows a vehicle 100 configured to sense a vehicular environment. A radar 52 and far field camera 62 form a sensor pair that are both placed at the driver side, and are powered by a battery power supply 70. The power could be taken from an appropriate generator instead of from a battery. A second pair of sensors in the form of a radar 54 and a far field camera 64 are both placed at the non-driver side, and are powered by battery 80. The power circuitry for each sensor pair is separate, and thus the battery supply circuits form redundant pairs. Therefore, back-up protection is provided if sensors fail or their drive circuitry fails. For highway operation where the level of automation of vehicles is sought to be increased, with the driver not required to actively supervise the functioning of the vehicle during the vehicle operation, enhanced environmental perception is required with an associated increase in fail safe systems, which is provided by the apparatus, vehicle and method described above.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

### LIST OF REFERENCE NUMBERS

- 10: Apparatus for sensing a vehicular environment;
- 20: At least one forward looking sensor;
- 30: Processing unit;
- 40: Output unit;
- 50: Radar sensor;
- 52: First of a pair of radar sensors;
- 54: Second of a pair of radar sensors;
- 60: Camera sensor;
- 62: First of a pair of camera sensors;
- 64: Second of a pair of camera sensors;
- 70: First power supply;
- 80: Second power supply;
- 100: Vehicle configured to sense a vehicular environment,
- 110: Vertical centre-plane;
- 120: Vertical left-plane;
- 130: Vertical right-plane;
- 140: Vehicle control system;
- 200: Method for sensing a vehicular environment;
- 210: Acquiring at least one vehicular environment data;
- 220: Processing at least one vehicular environment data;
- 230: Determining scene information; and
- 240: Outputting data representative of the scene information.

## Claims

1. An apparatus (10) for sensing a vehicular environment when fitted to a vehicle, the apparatus comprising:
- at least one forward looking sensor (20), wherein the at least one forward looking sensor (20) comprises a pair of radar sensors (52, 54);
- a processing unit (30); and
- an output unit (40);
wherein, the at least one forward looking sensor is configured to acquire at least one vehicular environment scene data for a vehicle on a road;
wherein, the at least one forward looking sensor is configured to provide the at least one vehicular environment scene data to the processing unit;
wherein, the processing unit is configured to determine scene information on the basis of the at least one vehicular environment scene data, wherein determination of the scene information comprises processing image data from both radars in combination in order to determine the location of objects, the location of a side of the road and determine object identity information;
wherein, the output unit is configured to output data representative of the scene information, and wherein on the basis of a location and identity of an object with respect to the location of the side of the road the output data representative of the scene information is configured to indicate that the vehicle be automatically decelerated and/or stopped;
wherein, the at least one forward looking sensor is configured to acquire the at least one vehicular environment scene data when fitted to at least one position at the front of a vehicle (100), wherein the vehicle is defined by a vertical centre-plane (110) that runs in a forward-aft direction along the centre of the vehicle and the vehicle is defined by a vertical left-plane (120) that runs in a forward-aft direction along the left hand side of the vehicle and the vehicle is defined by a vertical right-plane (130) that runs in a forward-aft direction along the right hand side of the vehicle, and wherein a first one of the pair of radar sensors (52) is horizontally spaced from the centre-plane (110) such that it is closer to the left-plane (120) than to the centre-plane and a second one of the pair of radar sensors (54) is horizontally spaced from the centre-plane such that it is closer to the right-plane (130) than to the centre-plane.

2. Apparatus according to claim 1, wherein the at least one forward looking sensor (20) comprises a camera sensor (60).

3. Apparatus according to any of claims 1-2, wherein the at least one forward looking sensor (20) comprises a pair of camera sensors (62, 64).

4. Apparatus according to claim 3, wherein a first one of the pair of camera sensors (62) is horizontally spaced from the centre-plane (110) such that it is closer to the left-plane (120) than to the centre-plane and a second one of the pair of camera sensors (64) is horizontally spaced from the centre-plane such that it is closer to the right-plane (130) than to the centre-plane.

5. Apparatus according to any of claims 1-4, wherein a first power supply (70) is configured to power a first one of the at least two sensors and a second power supply (80) is configured to power a second one of the at least two sensors.

6. Apparatus according to claim 5 when dependent on claim 3, wherein a first power supply (70) is configured to power the first one of the pair of radar sensors (52) and the first one of the camera sensors (62), and wherein a second power supply (80) is configured to power the second one of the pair of radar sensors (54) and the second one of the camera sensors (64).

7. A vehicle (100) configured to sense a vehicular environment comprising:
- an apparatus (10) for sensing a vehicular environment according to any of the preceding claims;
- a vehicle control system (140); and
wherein, the apparatus is configured to cooperate with the vehicle control system to control at least one vehicle function; and
wherein control of the at least one vehicle function comprises inputs applied to a braking system and/or inputs applied to an accelerator/decelerator system.

8. A method (200) for sensing a vehicular environment, comprising:
a) acquiring (210) with at least one forward looking sensor (20) at least one vehicular environment scene data, wherein the at least one forward looking sensor (20) comprises a pair of radar sensors (52, 54);
b) providing (220) to a processing unit (30) the at least one vehicular environment scene data, wherein the at least one vehicular environmental scene data for a vehicle on a road;
c) determining (230) with the processing unit scene information on the basis of the at least one vehicular environment scene data, wherein determination of the scene information comprises processing image data from both radars in combination in order to determine the location of objects, the location of a side of the road and determine object identity information;
d) outputting (240) with an output unit (40) output data representative of the scene information, and wherein on the basis of a location and identity of an object with respect to the location of the side of the road the output data representative of the scene information is configured to indicate that the vehicle be automatically decelerated and/or stopped ;
wherein, the at least one forward looking sensor is configured to acquire the at least one vehicular environment scene data when fitted to at least one position at the front of a vehicle (100), wherein the vehicle is defined by a vertical centre-plane (110) that runs in a forward-aft direction along the centre of the vehicle and the vehicle is defined by a vertical left-plane (120) that runs in a forward-aft direction along the left hand side of the vehicle and the vehicle is defined by a vertical right-plane (130) that runs in a forward-aft direction along the right hand side of the vehicle, and wherein a first one of the pair of radar sensors (52) is horizontally spaced from the centre-plane (110) such that it is closer to the left-plane (120) than to the centre-plane and a second one of the pair of radar sensors (54) is horizontally spaced from the centre-plane such that it is closer to the right-plane (130) than to the centre-plane.

## Patentansprüche

1. Vorrichtung (10) zum Erfassen einer Fahrzeugumgebung, wenn sie an einem Fahrzeug angebracht ist, wobei die Vorrichtung Folgendes umfasst:
- mindestens einen nach vorne orientierten Sensor (20), wobei der mindestens eine nach vorne orientierte Sensor (20) ein Paar Radarsensoren (52, 54) umfasst;
- eine Verarbeitungseinheit (30); und
- eine Ausgabeeinheit (40);
wobei der mindestens eine nach vorne orientierte Sensor konfiguriert ist, mindestens einen Fahrzeugumgebungsszenen-Datensatz für ein Fahrzeug auf einer Straße zu erfassen;
wobei der mindestens eine nach vorne orientierte Sensor konfiguriert ist, den mindestens einen Fahrzeugumgebungsszenen-Datensatz der Verarbeitungseinheit bereitzustellen;
wobei die Verarbeitungseinheit konfiguriert ist, auf der Grundlage des mindestens einen Fahrzeugumgebungsszenen-Datensatzes Szeneninformationen zu bestimmen, wobei die Bestimmung der Szeneninformationen das Verarbeiten von Bilddaten von beiden Radaren in Kombination, um den Ort von Gegenständen, den Ort einer Seite der Straße und Gegenstands-Identitätsinformationen zu bestimmen, umfasst;
wobei die Ausgabeeinheit konfiguriert ist, Daten auszugeben, die die Szeneninformationen darstellen, und wobei die Ausgabedaten, die die Szeneninformationen darstellen, auf der Grundlage eines Ortes und einer Identität eines Gegenstands in Bezug auf den Ort der Seite der Straße konfiguriert sind anzugeben, dass das Fahrzeug automatisch verzögert und/oder angehalten werden soll;
wobei der mindestens eine nach vorne orientierte Sensor konfiguriert ist, den mindestens einen Fahrzeugumgebungsszenen-Datensatz zu erfassen, wenn er an mindestens einer Position auf der Stirnseite eines Fahrzeugs (100) angebracht ist, wobei das Fahrzeug durch eine vertikale Mittelebene (110) definiert ist, die in einer Vorne-Hinten-Richtung entlang der Mitte des Fahrzeugs verläuft, und das Fahrzeug durch eine vertikale linke Ebene (120) definiert ist, die in einer Vorne-Hinten-Richtung entlang der linken Seite des Fahrzeugs verläuft, und das Fahrzeug durch eine vertikale rechte Ebene (130) definiert ist, die in einer Vorne-Hinten-Richtung entlang der rechten Seite des Fahrzeugs verläuft, und wobei ein erster (52) des Paares Radarsensoren von der Mittelebene (110) horizontal beabstandet ist, derart, dass er sich näher bei der linken Ebene (120) als bei der Mittelebene befindet, und ein zweiter (54) des Paares Radarsensoren von der Mittelebene horizontal beabstandet ist, derart, dass er sich näher bei der rechten Ebene (130) als bei der Mittelebene befindet.

2. Vorrichtung nach Anspruch 1, wobei der mindestens eine nach vorne orientierte Sensor (20) einen Kamerasensor (60) umfasst.

3. Vorrichtung nach einem der Ansprüche 1-2, wobei der mindestens eine nach vorne orientierte Sensor (20) ein Paar Kamerasensoren (62, 64) umfasst.

4. Vorrichtung nach Anspruch 3, wobei ein erster (62) des Paares Kamerasensoren von der Mittelebene (110) horizontal beabstandet ist, derart, dass er sich näher bei der linken Ebene (120) als bei der Mittelebene befindet, und ein zweiter (64) des Paares Kamerasensoren von der Mittelebene horizontal beabstandet ist, derart, dass er sich näher bei der rechten Ebene (130) als bei der Mittelebene befindet.

5. Vorrichtung nach einem der Ansprüche 1-4, wobei eine erste Stromversorgung (70) konfiguriert ist, einen ersten der mindestens zwei Sensoren mit Energie zu versorgen, und eine zweite Stromversorgung (80) konfiguriert ist, einen zweiten der mindestens zwei Sensoren mit Energie zu versorgen.

6. Vorrichtung nach Anspruch 5, wenn abhängig von Anspruch 3, wobei eine erste Stromversorgung (70) konfiguriert ist, den ersten (52) des Paares Radarsensoren und den ersten (62) der Kamerasensoren mit Energie zu versorgen, und wobei eine zweite Stromversorgung (80) konfiguriert ist, den zweiten (54) des Paares Radarsensoren und den zweiten (64) der Kamerasensoren mit Energie zu versorgen.

7. Fahrzeug (100), das konfiguriert ist, eine Fahrzeugumgebung zu erfassen, das Folgendes umfasst:
- eine Vorrichtung (10) zum Erfassen einer Fahrzeugumgebung nach einem der vorhergehenden Ansprüche; und
- ein Fahrzeugsteuersystem (140),
wobei die Vorrichtung konfiguriert ist, mit dem Fahrzeugsteuersystem zusammenzuarbeiten, um mindestens eine Fahrzeugfunktion zu steuern; und
wobei die Steuerung der mindestens einen Fahrzeugfunktion Eingaben, die auf ein Bremssystem angewendet werden, und/oder Eingaben, die auf ein Beschleunigungs/Verzögerungs-System angewendet werden, umfasst.

8. Verfahren (200) zum Erfassen einer Fahrzeugumgebung, das Folgendes umfasst:
a) Erfassen (210) von mindestens einem Fahrzeugumgebungsszenen-Datensatz mit mindestens einem nach vorne orientierten Sensor (20), wobei der mindestens eine nach vorne orientierte Sensor (20) ein Paar Radarsensoren (52, 54) umfasst;
b) Bereitstellen (220) des mindestens einen Fahrzeugumgebungsszenen-Datensatzes für eine Verarbeitungseinheit (30), wobei der mindestens eine Fahrzeugumgebungsszenen-Datensatz für ein Fahrzeug auf einer Straße;
c) Bestimmen (230) von Szeneninformationen mit der Verarbeitungseinheit auf der Grundlage des mindestens einen Fahrzeugumgebungsszenen-Datensatzes, wobei die Bestimmung der Szeneninformationen das Verarbeiten von Bilddaten von beiden Radaren in Kombination, um den Ort von Gegenständen, den Ort einer Seite der Straße und Gegenstands-Identitätsinformationen zu bestimmen, umfasst;
d) Ausgeben (240) von Ausgabedaten, die die Szeneninformationen darstellen, mit einer Ausgabeeinheit (40), wobei die Ausgabedaten, die die Szeneninformationen darstellen, auf der Grundlage eines Ortes und einer Identität eines Gegenstands in Bezug auf den Ort der Seite der Straße konfiguriert sind anzugeben, dass das Fahrzeug automatisch verzögert und/oder angehalten werden soll;
wobei der mindestens eine nach vorne orientierte Sensor konfiguriert ist, den mindestens einen Fahrzeugumgebungsszenen-Datensatz zu erfassen, wenn er an mindestens einer Position auf der Stirnseite eines Fahrzeugs (100) angebracht ist, wobei das Fahrzeug durch eine vertikale Mittelebene (110) definiert ist, die in einer Vorne-Hinten-Richtung entlang der Mitte des Fahrzeugs verläuft, und das Fahrzeug durch eine vertikale linke Ebene (120) definiert ist, die in einer Vorne-Hinten-Richtung entlang der linken Seite des Fahrzeugs verläuft, und das Fahrzeug durch eine vertikale rechte Ebene (130) definiert ist, die in einer Vorne-Hinten-Richtung entlang der rechten Seite des Fahrzeugs verläuft, und wobei ein erster (52) des Paares Radarsensoren von der Mittelebene (110) horizontal beabstandet ist, derart, dass er sich näher bei der linken Ebene (120) als bei der Mittelebene befindet, und ein zweiter (54) des Paares Radarsensoren von der Mittelebene horizontal beabstandet ist, derart, dass er sich näher bei der rechten Ebene (130) als bei der Mittelebene befindet.

## Revendications

1. Installation (10) de détection d'un environnement véhiculaire, lorsqu'elle est montée sur un véhicule, l'installation comprenant :
- au moins un capteur (20) regardant vers l'avant, dans lequel le au moins un capteur (20) regardant vers l'avant comprend une paire de détecteurs (52, 54) radars ;
- une unité (30) de traitement ; et
- une unité (40) de sortie ;
dans laquelle le au moins un capteur regardant vers l'avant est configuré pour acquérir au moins une donnée de scène d'environnement véhiculaire d'un véhicule sur une route ;
dans laquelle le au moins un capteur regardant vers l'avant est configuré pour donner la au moins une donnée de scène d'environnement véhiculaire à l'unité de traitement ;
dans laquelle l'unité de traitement est configurée pour déterminer une information de scène, sur la base de la au moins une donnée de scène d'environnement véhiculaire, dans laquelle la détermination de l'information de scène comprend un traitement d'une donnée d'image provenant des deux radars en combinaison, afin de déterminer l'emplacement d'objets, l'emplacement d'un côté de la route et déterminer une information d'identité de l'objet ; dans laquelle l'unité de sortie est configurée pour sortir une donnée représentative de l'information de scène et dans laquelle, sur la base d'un emplacement et d'une identité d'un objet par rapport à l'emplacement du côté de la route, la donnée de sortie représentative de l'information de scène est configurée pour indiquer que le véhicule décélère automatiquement et/ou est arrêté ;
dans laquelle le au moins un capteur regardant vers l'avant est configuré pour acquérir la au moins une donnée de scène d'environnement véhiculaire adaptée à au moins une position à l'avant d'un véhicule (100), dans laquelle le véhicule est défini par un plan (110) central vertical, qui court dans une direction de l'avant à l'arrière le long du centre du véhicule, et le véhicule est défini par un plan (120) gauche vertical, qui court dans une direction de l'avant vers l'arrière, le long du côté à main gauche du véhicule, et le véhicule est défini par un plan (130) vertical à droite, qui court dans une direction de l'avant vers l'arrière le long du côté à main droite du véhicule, et dans laquelle un premier dans la paire de détecteurs (52) radars est à distance horizontalement du plan (110) central, de manière à être plus près du plan (120) à gauche que du plan central et un deuxième de la paire de capteurs (54) radars est à distance horizontalement du plan central, de manière à être plus près du plan (130) à droite que du plan central.

2. Installation suivant la revendication 1, dans laquelle le au moins un capteur (20) regardant vers l'avant comprend un capteur (60) à caméra.

3. Installation suivant l'une quelconque des revendications 1 à 2, dans laquelle le au moins un capteur (20) regardant vers l'avant comprend une paire de capteurs (62, 64) à caméra.

4. Installation suivant la revendication 3, dans laquelle un premier de la paire de capteurs (62) à caméra est à distance horizontalement du plan (110) central, de manière à être plus près du plan (120) à gauche que du plan central et un deuxième de la paire de capteurs (64) à caméra est à distance horizontalement du plan central, de manière à être plus près du plan (130) à droite que du plan central.

5. Installation suivant l'une quelconque des revendications 1 à 4, dans laquelle une première alimentation (70) en électricité est configurée pour alimenter au moins l'un des au moins deux capteurs et une deuxième alimentation (80) en électricité est configurée pour alimenter un deuxième des au moins deux capteurs.

6. Installation suivant la revendication 5 lorsqu'elle dépend de la revendication 3, dans laquelle une première alimentation (70) en électricité est configurée pour alimenter le premier capteur de la paire de détecteurs (52) radars et le premier capteur des capteurs (62) à caméra, et dans lequel une deuxième source (80) d'alimentation en électricité est configurée pour alimenter le deuxième capteur de la paire de détecteurs (54) radars et le deuxième capteur des capteurs (64) à caméra.

7. Véhicule (100) configuré pour détecter un environnement véhiculaire comprenant :
- une installation (10) de détection d'un environnement véhiculaire suivant l'une quelconque des revendications précédentes ;
- un système (140) de commande de véhicule ; et
dans lequel l'installation est configurée pour coopérer avec le système de commande du véhicule pour commander au moins une fonction du véhicule ; et
dans lequel la commande de la au moins une fonction du véhicule comprend des entrées appliquées à un système de freinage et/ou des entrées appliquées à un système d'accélérateur / décélérateur.

8. Procédé (200) de détection d'un environnement véhiculaire comprenant :
a) acquérir (210) par au moins un capteur (20) regardant vers l'avant au moins une donnée de scène d'environnement véhiculaire, le au moins un capteur (20) regardant vers l'avant comprenant une paire de détecteurs (52, 54) radars ;
b) donner (220) à une unité (30) de traitement la au moins une donnée de scène d'environnement véhiculaire, la au moins une donnée de scène véhiculaire étant pour un véhicule sur une route ;
c) déterminer (230), par l'unité de traitement, une information de scène sur la base de la au moins une donnée de scène d'environnement véhiculaire, dans lequel la détermination de l'information de scène comprend un traitement d'une donnée d'image à partir des deux radars en combinaison, afin de déterminer l'emplacement d'objets, l'emplacement d'un côté de la route et de déterminer une information d'identité d'objet ;
d) sortir (240), par une unité (40) de sortie, une donnée de sortie représentative de l'information de scène et dans laquelle, sur la base de l'emplacement et de l'identité d'un objet par rapport à l'emplacement du côté de la route, la donnée de sortie représentative de l'information est configurée pour indiquer que le véhicule est décéléré automatiquement et/ou arrêté ;
dans lequel le au moins un capteur regardant vers l'avant est configuré pour acquérir la au moins une donnée de scène d'environnement véhiculaire adaptée à au moins une position à l'avant d'un véhicule (100), dans lequel le véhicule est défini par un plan (110) central vertical, qui court dans une direction de l'avant à l'arrière le long du centre du véhicule, et le véhicule est défini par un plan (120) gauche vertical, qui court dans une direction de l'avant vers l'arrière le long du côté à main gauche du véhicule, et le véhicule est défini par un plan (130) vertical à droite, qui court dans une direction de l'avant vers l'arrière le long du côté à main droite du véhicule, et dans laquelle un premier dans la paire de détecteurs (52) radars est à distance horizontalement du plan (110) central, de manière à être plus près du plan (120) à gauche que du plan central et un deuxième de la paire de capteurs (54) radars est à distance horizontalement du plan central, de manière à être plus près du plan (130) à droite que du plan central.
